# FASCICULE DE BREVET EUROPEEN

(11) **EP 3 126 244 B1**
(45) Date de publication et mention de la délivrance du brevet: **31.01.2018**
(21) Numéro de dépôt: 15711082.6
(22) Date de dépôt: 10.03.2015
(51) Int. Cl.: B64F 5/00

(54) **DISPOSITIF DE PRÉ-ASSEMBLAGE DE PIÈCES AVEC INTERPOSITION DE MASTIC ET PROCÉDÉ DE PRÉ-ASSEMBLAGE**
VORRICHTUNG UND METHODE ZUR VORMONTAGE VON BAUTEILEN
PRE-ASSEMBLY FACILITY AND METHOD

(30) Priorité: 04.04.2014 FR 1453026
(43) Date de publication de la demande: 08.02.2017
(73) Titulaire: Stelia Aerospace, 17300 Rochefort (FR)
(72) Inventeur: GRATECAP, Stéphane, F-17870 Breuil Magne (FR); MORAND, Xavier, F-17430 Tonnay Charente (FR); DUCOURNEAU, Hervé, F-17300 Rochefort (FR)
(74) Mandataire: Maupilier, Didier
(86) Numéro de dépôt international: PCT/EP2015/054892
(87) Numéro de publication internationale: WO 2015/150027

(56) Documents cités:
- WO-A1-01/79061
- WO-A1-98/13169
- US-A1- 2012 011 693

## Description

La présente invention appartient au domaine de l'assemblage des structures.

Plus particulièrement l'invention appartient au domaine de l'assemblage de structures devant assurer une étanchéité et une protection contre les phénomènes de corrosion sous micro-déplacements tel qu'il est connu dans les structures d'aéronefs soumis à des environnements vibratoires et aux phénomènes de fatigue.

Plus particulièrement, l'invention concerne un dispositif pour préparer des pièces à assembler avec interposition d'un mastic ainsi qu'un procédé pour pré-assembler les pièces.

Dans le domaine de l'assemblage et en particulier de l'assemblage des pièces de structure en construction aéronautique, il est connu de déposer entre les faces des pièces devant être mises en contact un mastic tel qu'un mastic polymérisable, par exemple les mastics désignés PR (TM) dont il existe de nombreuses variétés adaptées à des conditions particulières.

Le mastic assure l'étanchéité de l'assemblage, à l'air par exemple pour les parois d'un fuselage pressurisé ou à un liquide par exemple dans le cas d'un réservoir de carburant. Le mastic réalise également une liaison mécanique absorbant les micro-déplacements qui se produisent inévitablement entre les pièces assemblées soumises à un environnement vibratoire pouvant être sévère.

Pour assurer ces fonctions, le mastic conserve, durant la durée de vie de l'assemblage dans lequel il est intégré, des propriétés des élastomères qui assurent une liaison mécanique à la fois résistante et souple en évitant le frottement direct entre les pièces.

Afin d'épouser parfaitement la surface des pièces et d'adhérer à ces surfaces, le mastic est déposé dans un état pâteux puis polymérisé lorsque les pièces à assembler sont positionnées l'une par rapport à l'autre.

Les mastics mis en oeuvre sont par exemple des mastics à deux composants qui une fois mélangés vont entraîner la polymérisation.

Le mastic peut être mis en oeuvre pendant une durée plus ou moins longue qui dépend du type de mastic et des conditions, en particulier la température de son stockage et celle de sa mise en oeuvre. La mise en oeuvre de robots dans des ateliers automatisés tel que décrit dans le document US 2012/011693 permet de réaliser rapidement des assemblages précis.

Toutefois, pour que la liaison mécanique entre les pièces avec interposition de mastic soit de bonne qualité et que l'étanchéité soit assurée, il est essentiel que le mastic adhère à la surface des pièces.

Cette qualité de l'adhérence du mastic est obtenue par une préparation des surfaces des pièces sur lesquelles le mastic doit adhérer.

La préparation des surfaces est d'autant plus importante que la plupart des pièces élémentaires devant être assemblées ont reçu un traitement de surface et / ou un dépôt de revêtement qui n'est pas nécessairement adapté pour favoriser l'adhérence du mastic.

En outre les pièces élémentaires ont généralement été manipulées et ont séjourné en atelier ou dans des magasins de stockage avant d'être assemblées et leurs surfaces peuvent avoir été contaminées par des poussières, des graisses, de manière générale toutes sortes d'aérosols auxquels peut s'ajouter une modification physico-chimique des surfaces par des phénomènes d'oxydation à l'air, contamination qui se produit également dans l'atelier automatisé d'assemblage.

Ainsi il est connu dans les ateliers d'assemblage de procéder à une préparation des surfaces sur lesquelles le mastic doit adhérer.

Le plus souvent il est procédé manuellement à un premier dégraissage des surfaces à l'aide d'un solvant imbibant une lingette, suivit d'un dérochage à l'aide d'un tampon abrasif, suivit d'un nouveau dégraissage à l'aide d'un solvant imbibant une lingette.

Après cette préparation, le mastic est déposé, par exemple au rouleau ou à la spatule, sur les surfaces préparées, généralement dans un délai imposé pour éviter que les surfaces préparées ne subissent de nouvelles pollutions, et les pièces à assembler sont positionnées entre elles puis fixées et serrées temporairement par des épingles d'assemblages en attendant une étape ultérieure de pose des fixations définitives.

Il est également connu de réaliser ces opérations par des moyens robotisés.

Dans ce cas, chaque pièce est fixée sur un bâti de maintien et un bras robot réalise un dérochage au moyen d'une ponceuse, par exemple une ponceuse orbitale, puis procède à un dégraissage en plusieurs passes, par exemple trois passes, avec des lingettes imbibées d'un solvant et enfin réalise le dépôt du mastic. Les pièces sont ensuite pré-assemblées.

Ces deux solutions, manuelle et robotisée, présentent en commun les défauts de générer des poussières lors de l'étape de dérochage, poussières qui viennent polluer l'environnement de l'atelier et de la zone d'assemblage, et de mettre en oeuvre des solvants dont l'usage impose des normes de sécurité contraignantes vis à vis des personnes et qui présentent des risques de pollution pouvant conduire à terme à l'interdiction de leur utilisation.

La maîtrise des risques pour la santé des opérateurs liés à la manipulation des produits, solvants et mastics, et aux troubles musculo-squelettiques est une contrainte importante, en particulier dans le cas d'une application manuelle qui en outre ne permet pas de garantir une qualité constante du résultat ni une consommation optimisée des consommables.

Le procédé robotisé quant à lui, sans éviter l'utilisation des consommables, lingettes et solvants, exige de nombreuses manipulations et s'avère également coûteux en temps.

La présente invention propose un procédé pour le pré-assemblage d'une première pièce avec au moins une seconde pièce et avec interposition d'un mastic dans lequel les surfaces des première et de la ou des secondes pièces devant être mises en contact sont soumises à une opération de préparation de surface suivi du dépôt d'un mastic polymérisable frais sur la surface préparée d'au moins une des première ou secondes pièces et dans lequel la première pièce et au moins une seconde pièce sont pré-assemblées par des fixations provisoires.

Suivant l'invention, le procédé comporte les étapes de :
- préparation des surfaces, devant être mises en contact, de la première pièce et d'au moins une seconde pièce par la projection sur les surfaces à préparer d'un jet de plasma froid généré par au moins une torche à plasma froid portée par un effecteur d'un robot de préparation, puis ;
- refroidissement des dites surfaces devant être mises en contact à une température inférieure à une température admise pour le dépôt de mastic frais, puis ;
- dépôt d'un cordon de mastic frais, au moyen du robot de préparation, sur les surfaces devant être mise en contact de la première pièce et ou de l'au moins une seconde pièce, puis ;
- positionnement par le robot de préparation de ladite au moins une seconde pièce sur la première pièce, puis ;
- pose de fixations provisoires et serrage de ladite au moins une seconde pièce avec la première pièce par un robot d'épinglage, lorsque le mastic est encore frais.

Il est ainsi réalisé une étape de préparation de surface sans détérioration de la surface de la pièce, parfaitement localisée par une forme du jet de plasma, sans génération de poussière et sans utilisation de solvant. En outre le dépôt de mastic, par exemple un mastic PR™ à deux composants polymérisable à la température ambiante d'un atelier commercialisé par la société Le Joint Français du groupe Hutchinson, est réalisé rapidement après la préparation de surface, a priori sans stockage intermédiaire des pièces préparées, évitant ainsi que la surface préparée ne soit polluée avant le dépôt du mastic.

Suivant une méthode de mise en oeuvre du procédé, le cordon de mastic frais est déposé au moyen d'une buse d'une unité de production de mastic, par déplacement de ladite buse portée par l'effecteur du robot de préparation sur des surfaces préalablement préparées des première pièce et ou au moins une seconde pièce, lesdites première et secondes pièces étant maintenues individuellement fixes sur des bâtis. Il est ainsi possible de déposer le cordon de mastic frais sur des formes complexes des pièces de grandes dimensions en profitant des capacités de déplacement et d'orientation de l'effecteur du robot de préparation.

Suivant une autre méthode, le robot de préparation déplace une pièce, maintenue par des moyens de préhension de l'effecteur dudit robot de préparation, pour déposer un cordon de mastic frais délivré par une buse d'une unité de production de mastic frais sur des surfaces préalablement préparées. Dans cette mise en oeuvre, la buse délivrant le mastic frais n'est pas nécessairement mobile et la forme du cordon déposé sur une pièce est obtenue par le déplacement de la pièce pendant que la buse délivre le mastic frais. La pièce qui est dans ce cas tenue par le robot de préparation peut alors être positionnée sur l'autre pièce dès que le cordon de mastic a été déposé.

Dans un mode de mise en oeuvre, le procédé comporte une étape préalable de chargement, dans un système de contrôle et de commande d'au moins un robot, de données caractérisant les surfaces des pièces devant être préparées et des surfaces sur lesquelles doit être déposé du mastic et caractérisant une trajectoire en position et en orientation de la ou des torches à plasma froid et de la ou des buses par rapport aux pièces.

Il est ainsi possible, suivant le procédé, de réaliser un déplacement automatique des moyens positionnant le jet de plasma froid et le cordon de mastic par rapport aux pièces devant être préparées.

Pour être tolérant à des erreurs de position de pièces à traiter et améliorer la précision des opérations de préparation de surface et de dépôt de mastic, les données théoriques préalablement chargées sont recalées autant que de besoin par un procédé conventionnel mettant en oeuvre la détection de parties caractéristiques des pièces, par exemple les bords de la pièces ou des cibles placées sur la pièce, pouvant être reconnue par des moyens optiques ou par d'autres types de capteurs.

Suivant un mode de mise en oeuvre du procédé, une pluralité de secondes pièces sont assemblées à la première pièce et :
- l'étape de préparation de surface est réalisée pour la pluralité de secondes pièces et pour la pièce à laquelle ladite pluralité de pièces doit être assemblée, puis ;
- pour chacune des secondes pièces sont réalisées successivement les étapes a) de dépôt d'un cordon de mastic frais, b) de positionnement par le robot de préparation de la seconde pièce considérée devant être assemblée sur la première pièce et c) de pose de fixations provisoires et de serrage de la seconde pièce considérée avec ladite première pièce par un robot d'épinglage, les étapes a), b) et c) étant effectuées sur une seconde pièce considérée avant d'être effectuées sur une autre pièce de la pluralité de secondes pièces.

En enchaînant ainsi le dépôt du cordon de mastic frais et le pré-assemblage pour chacune des secondes pièces, il est évité une exposition du mastic frais à d'éventuel polluant, et la réduction du temps entre le dépôt du mastic frais et le pré-assemblage permet de mettre en oeuvre des mastics ayant une polymérisation plus rapide que pour les procédés conventionnels d'où une réduction des cycles d'assemblage.

L'invention concerne également un dispositif pour le pré-assemblage de pièces de structure à assembler avec interposition de mastic.

Le dispositif de l'invention comporte :
- au moins un robot de préparation dont un effecteur comporte une ou plusieurs torches à plasma froid et comporte un préhenseur adapté à la saisie de pièces à assembler ;
- des moyens de commande et de contrôle du robot de préparation ;
- un premier bâti de maintien fixe d'une première pièce dans le dispositif ;
- un second bâti de maintien d'une seconde pièce ou d'une pluralité de secondes pièces devant être déplacées dans le dispositif par un robot de préparation ;
- au moins une unité de production de mastic frais et de distribution de mastic frais par au moins une buse de ladite unité de production pour déposer un cordon de mastic sur la première pièce et / ou la ou les secondes pièces.

Ainsi le dispositif comporte les moyens nécessaires à la préparation d'une surface par la projection sur les surfaces à préparer d'un plasma froid et au dépôt de mastic avec les bénéfices attendus du procédé de préparation des pièces et les moyens pour manipuler des pièces.

Avantageusement le dispositif comporte également au moins un robot d'épinglage fonctionnant en esclave du robot de préparation lors de la pose de fixations provisoires destinées à fixer l'au moins une seconde pièce à la première pièce. Un tel robot d'épinglage permet de manière coordonnée avec le positionnement d'une seconde pièce sur la première pièce de poser les fixations provisoires qui vont maintenir fixées ensemble la seconde pièce et la première pièce pendant que le robot de préparation va préparer une autre seconde pièce.

Avantageusement, la ou les torches à plasma froid sont agencées pour produire en fonctionnement un jet de plasma froid d'une largeur efficace sensiblement égale à une largeur d'une surface à préparer.

Il est ainsi préparé la surface souhaitée d'une largeur correspondant à la largeur du jet de plasma froid par un déplacement suivant une longueur de la surface.

Avantageusement, la ou les buses sont agencées pour déposer un cordon de mastic frais dont le diamètre moyen correspond à un volume linéique sensiblement égal à une largeur de la surface devant être recouverte de mastic dans l'assemblage à réaliser et d'une épaisseur voulue sensiblement constante.

Il est ainsi déposé en un passage de la ou des buses un cordon de mastic frais correspondant aux caractéristiques souhaitées sur la surface de la pièce sur laquelle doit être formé un joint de mastic, le cordon étant écrasé lors du pré-assemblage des pièces par les fixations provisoires pour prendre la forme définitive du joint. Le volume maîtrisé du cordon de mastic frais déposé évite le fluage d'un excès de mastic en dehors de la zone des surfaces mises en contact dans l'assemblage et ainsi permet d'optimiser la quantité de mastic utilisé et d'éviter ou de minimiser les opérations pour retirer le mastic en excès ayant flué entre les pièces assemblées.

Suivant une forme de réalisation du dispositif une unité de production de mastic frais est solidaire d'un robot de préparation et au moins une buse est portée par l'effecteur dudit robot de préparation.

Suivant une autre forme de réalisation du dispositif, l'au moins une unité de production de mastic frais est agencée dans le dispositif de sorte que la ou les buses de ladite unité de production, délivrant du mastic frais, sont séparées du ou des robots de préparation et situées dans un rayon d'action de l'effecteur d'un robot de préparation.

Ces deux formes de réalisation pouvant coexister sur un même dispositif permettent de distribuer le mastic frais avec la mise en oeuvre du robot de préparation, chacune des formes pouvant s'avérer mieux adaptée à des dimensions et des formes de pièces particulières.

Dans une forme de réalisation, un capot est solidaire de l'effecteur et protège un volume affecté par le jet de plasma froid, volume compris entre une sortie de la ou des torches à plasma froid et la surface d'une pièce en cours de préparation.

Un tel capot apporte une sécurité aux personnes pouvant se trouver à proximité de l'effecteur lorsque celui-ci est en fonctionnement et protège également la zone en préparation en l'isolant, partiellement au moins, de l'environnement avant le dépôt du mastic.

Dans une forme de réalisation, le mastic frais alimentant les buses est obtenu par un mélange en continu de deux composants du mastic stockés dans des contenants distincts.

Ainsi le mélange des composants du mastic est réalisé peu de temps avant le dépôt du mastic ce qui permet d'engager la polymérisation du mastic à température ambiante le plus tard possible et de ne pas avoir à gérer des temps d'application stricts au niveau des robots pouvant être amenés à travailler quasiment en continu sur de longues périodes.

Avantageusement, le dispositif comporte des bâtis aptes à maintenir les pièces à préparer dans une position déterminée par rapport aux robots.

Dans une forme de réalisation du dispositif, un robot donné est apte à préparer plusieurs pièces devant être assemblées.

Notamment, le second bâti est configuré pour maintenir une pluralité de secondes pièces devant être pré-assemblées avec la première pièce (90).

Dans une forme de réalisation du dispositif, combinable avec la forme précédente, plusieurs robots sont agencés afin d'être aptes à préparer différentes surfaces d'une même pièce.

Il est ainsi possible d'agencer des dispositifs dont le nombre et l'agencement des robots permettent des gains de productivité et des possibilités d'être adaptés à différentes pièces à préparer et de pré-assemblages à réaliser.

Il est alors obtenu un dispositif qui permet de délivrer des ensembles de pièces pré-assemblées qui pourront être soumises à une étape ultérieure d'assemblage définitif.

La description de l'invention est faite en référence aux figures qui représentent de manière schématique et de manière non limitative :
- Figure 1 :: Une vue en perspective d'un robot de préparation du dispositif de pré-assemblage de pièces pendant une opération de préparation d'une pièce ;
- Figure 2 :: une illustration d'un premier mode de réalisation d'un dispositif de pré-assemblage de pièces devant être assemblées dans lequel un robot de préparation prépare des pièces devant pré-assemblées à une pièce de plus grandes dimensions en réalisant, outre la préparation de surface, le dépôt d'un cordon de mastic frais ;
- figure 3 :: une illustration d'un deuxième mode de réalisation d'un dispositif de pré-assemblage de pièces devant être assemblées dans lequel un robot de préparation prépare dans une première étape des surfaces des pièces devant être pré-assemblées à une pièce de plus grandes dimensions ;
- figure 4 :: une illustration du dispositif de pré-assemblage de la figure 3 dans lequel un robot de préparation déplace dans une seconde étape une pièce pour réaliser le dépôt de mastic frais par une buse séparée du robot de préparation pendant que le robot d'épinglage est en attente du positionnement la pièce sur laquelle est en cours le dépôt de mastic frais ;
- Figure 5 :: une représentation schématique d'un exemple de procédé de pré-assemblage de pièces devant être assemblées avec interposition de mastic.

Les figures illustrent des exemples de dispositifs 100 de pré-assemblage de pièces de structure suivant l'invention mis en oeuvre dans le cadre de l'assemblage de panneaux de fuselage d'un avion.

Le pré-assemblage est compris ici comme l'assemblage par des fixations provisoires de pièces préalablement préparées et mises dans les positions relatives qu'elles doivent avoir avec un mastic intercalaire. La préparation d'une pièce comporte dans ce cas une succession d'opérations dont une préparation de surface de certaines surfaces de la pièce et un dépôt de mastic sur les surfaces préparées.

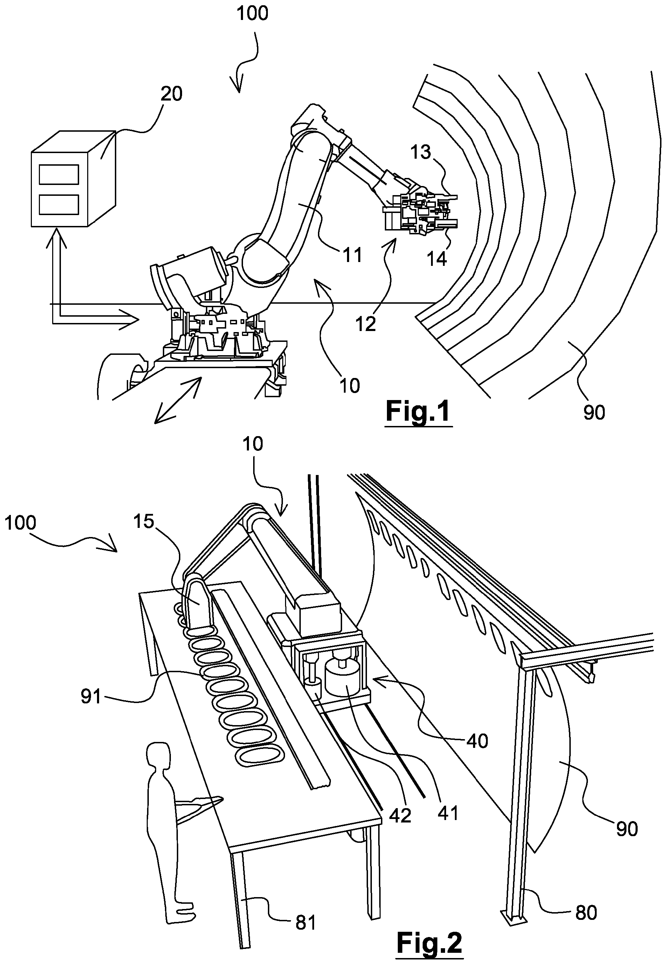

Sur la figure 1 une première pièce 90, dans l'exemple illustré un panneau de fuselage d'un avion, est représentée seule. La première pièce 90 est maintenue dans une position souhaitée pour sa préparation par un outillage, par exemple un bâti, non représenté sur la figure.

Le dispositif 100 comporte un robot de préparation 10 et des moyens de contrôle et de commande 20 dudit robot de préparation.

Le robot de préparation 10, dans l'exemple illustré un robot multi-axes à bras articulé sur une base mobile en translation pour la préparation de pièces allongées, comporte un bras 11 portant à une extrémité libre un effecteur 12.

Le robot de préparation 10 est conçu avec des dimensions, en particulier des longueurs de différents segments articulés du bras 11, et une mobilité de sorte que l'effecteur 12 puisse être placé, avec une orientation souhaitée, en vis à vis de tous les emplacements sur lesquels il souhaité réaliser une préparation de surface.

Les moyens de contrôle 20 comportent principalement un centre de commande numérique du robot de préparation 10, et de servitudes du robot apportant les ressources nécessaires au dit robot de préparation, en particulier l'énergie. Le centre de commande numérique comporte un programme qui gère les déplacements dudit robot de préparation et du bras 11 pour que l'effecteur 12 suive une trajectoire voulue par rapport à la pièce et qui gère les équipements de l'effecteur 12.

Les équipements de l'effecteur 12 sont principalement au moins une torche à plasma froid 13 et un préhenseur 14 d'une pièce à préparer et à assembler.

La torche à plasma froid 13 est un générateur produisant un jet d'un plasma à pression atmosphérique comportant des particules ionisées et des électrons, le jet étant sensiblement neutre électriquement. Suivant la technologie des plasmas froids, la température des électrons et donc leurs énergies sont très supérieures à celles des ions. Les électrons possèdent, dans un plasma froid, des capacités de réaction par collision qu'ils n'ont pas en conditions ordinaires et les ions ont des capacités de réaction chimique avec les matériaux qu'ils rencontrent limitées par leurs températures relativement basses, dans le domaine considéré inférieur à 420 K de température statique.

Une autre caractéristique de la torche à plasma froid 13 est de produire un jet non confiné qui se propage en air libre et qui peut être produit en continu pour autant que la torche à plasma froid soit alimentée par un courant en haute tension et en gaz comprimé avec un débit voulu pour la torche à plasma.

Lorsqu'il est projeté sur un matériau, le plasma agit mécaniquement du fait de la vitesse du jet de plasma, chimiquement par réaction des ions, et thermiquement en fonction de la température des ions. Par un ajustement des paramètres de la torche à plasma froid (température, débit) et de sa mise en oeuvre (distance à la surface traitée, durée d'exposition), paramètres fonctions des matériaux constitutifs de la pièce à décaper, il est obtenu un dégraissage et un nettoyage des surfaces soumises au jet de la torche à plasma froid.

Le préhenseur 14 est un élément terminal du bras 11 porté par l'effecteur 12 qui permet au robot de préparation 10 de saisir une pièce pour la positionner sur un poste de pré-assemblage.

Comme il sera précisé ultérieurement, le préhenseur 14 permet au robot de déplacer des pièces devant être manipulées pour les besoins de leurs préparations avant d'être positionnées.

Sur la figure 2 représentant le dispositif 100, un bâti 81 maintient une pluralité de secondes pièces 91, dans l'exemple illustré des encadrements de hublots, devant être assemblées à la première pièce 90, en cours de préparation par le robot de préparation 10.

L'absence d'action mécanique directe sur les secondes pièces 91, comme ce serait le cas pour un décapage au moyen d'une meule, évite d'avoir à brider lesdites secondes pièces pendant leurs préparations, le poids de chacune des secondes pièces étant suffisant pour les stabiliser sur le bâti 81.

Dans la forme de réalisation illustrée sur la figure 2, l'effecteur du robot de préparation 10 comporte également une buse de distribution de mastic frais.

La buse de distribution de mastic frais est par exemple un dispositif d'extrusion se terminant par une filière de section calibrée adaptée à la quantité de mastic frais devant être déposé et à la forme voulue pour un cordon de mastic déposé sur la pièce, le plus souvent un cordon de section sensiblement circulaire.

La buse est alimentée en mastic frais par une unité de production 40 de mastic avec un débit prenant en compte la vitesse de déplacement de la buse portée par l'effecteur 12 du robot de préparation 10 par rapport à la pièce sur laquelle est déposée le mastic frais, lorsque que le robot de préparation réalise le dépôt d'un cordon de mastic sur une surface préalablement décapée au moyen de la torche à plasma froid.

Dans une forme de réalisation, le mastic est poussé vers la buse par un dispositif tel qu'un piston ou une vis sans fin depuis un réservoir de mastic frais, c'est-à-dire dont les composants sont fraîchement mélangés, contenant une quantité adaptée à la préparation d'une pièce ou d'un ensemble de pièces dans un temps compatible avec la mise en oeuvre du mastic, généralement de plusieurs heures.

Dans une autre forme de réalisation, les différents composants du mastic sont maintenus dans des réservoirs séparés et mélangés avant d'être introduits dans la buse 14 de sorte que seule la quantité de mastic frais nécessaire est produite pendant la préparation des pièces.

Dans l'exemple de réalisation de la figure 2, la torche à plasma froid 13 et la buse sont agencés sur l'effecteur 12 de sorte que le robot de préparation 10 soit en mesure de réaliser une préparation de surface avec ladite torche à plasma froid dans une première étape puis de déposer un cordon de mastic avec la dite buse dans une seconde étape par des déplacements de l'effecteur 12 par rapport aux pièces en préparation.

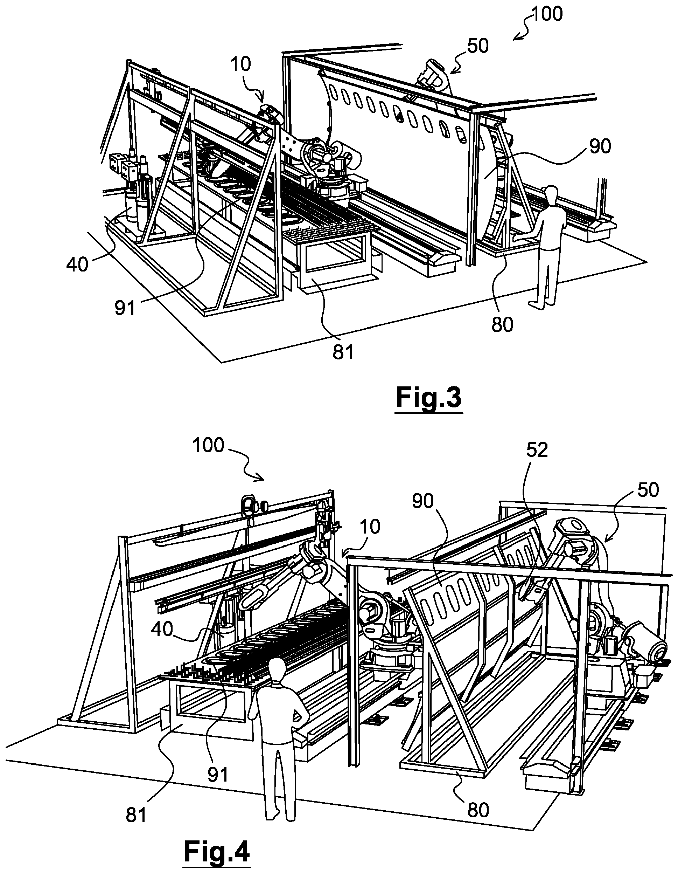

La figure 3 présente un exemple de réalisation du dispositif 100, voisin du dispositif illustré sur la figure 2, mais dans lequel l'effecteur 12 du robot de préparation 10 ne comporte pas de buse et ne délivre pas de mastic.

Dans cet exemple de réalisation du dispositif 100, une ou plusieurs unités de distribution 40 de mastic sont configurées pour délivrer un cordon de mastic de géométrie adaptée, comme dans l'exemple de réalisation précédent, mais lesdites unités de distribution de mastic sont agencées sur des postes séparés dans un périmètre d'action de l'effecteur 12 du robot de préparation 10.

Ainsi lorsqu'il doit être déposé un cordon de mastic, le robot de préparation 10 saisi la pièce avec le préhenseur 14 de l'effecteur 12 et, comme représenté sur la figure 4, déplace celle ci dans un axe de la filière de la buse délivrant le mastic frais.

Par un déplacement adapté de la pièce saisie, un cordon de mastic frais est déposé à l'emplacement souhaité sans déplacement de la buse, tout au plus avec des déplacements simplifiés de la buse par exemple suivant un axe.

Les unités de distribution 40 de mastic sont par exemple agencées à poste fixe comme dans l'exemple illustré.

Dans une autre forme de réalisation, non illustrée, une ou des unités de distribution de mastic sont agencées mobiles, par exemple sur des rails, de sorte à suivre au moins en partie des déplacements du robot de préparation 10 de sorte que les mouvements du robot de préparation pour réaliser le dépôt du cordon de mastic frais sur une pièce sont limités, en particulier lorsqu'il est préparé une panoplie de pièces agencées sur un bâti de support.

Sur l'exemple de dispositif 100 des figures 2 et 3 et 4, il doit être remarqué les points suivants.

Les première pièce 90 et secondes pièces 91 en cours de préparation n'ont pas besoin d'être bridées, ou seulement faiblement pour des pièces légères, le jet de la torche à plasma produisant une préparation de surface sans générer d'efforts significatifs, et la dépose de mastic frais par la buse, bien que réalisée avec un contact, ne génère qu'un effort minime sur les pièces.

L'effecteur 12 de chaque robot de préparation 10 est protégé par un capot 15, nécessairement ouvert du côté de la surface de la pièce en préparation, qui assure la sécurité des personnels pouvant se trouver à proximité de l'effecteur. Avantageusement la torche à plasma froid n'est activée que lorsque le capot 15 est suffisamment proche de la pièce pour qu'un opérateur ne puisse pas introduire sa main dans le jet de plasma. Avantageusement des moyens d'aspiration aspirent dans la cavité du capot 15 des vapeurs dégagées lors de la préparation de surface par plasma froid et le cas échéant par le mastic frais lors de son dépôt.

Dans une forme de réalisation, chaque unité de distribution 40 de mastic frais comporte une réserve de chacun des composants du mastic dans des contenants 41, 42 séparés, dans l'exemple illustré sur la figure 2 des réservoirs cylindriques, les composants étant mélangés par des moyens non visibles sur la figure dans des proportions souhaitées pour former du mastic frais poussé vers la buse.

Il doit être remarqué que si des dimensions des pièces à préparer le permettent, le dispositif 100 peut comporter plusieurs robots de préparation, robots de préparation qui peuvent être à bases fixes ou mobiles et répartis pour travailler en parallèle sans interférence.

En outre le ou les robots de préparation peuvent avoir des formes différentes de celles illustrées, pour autant que les moyens portant l'effecteur sont conformés pour déplacer et orienter l'effecteur comme il est souhaité par rapport aux pièces à préparer et à pré-assembler.

L'effecteur, en fonction des dimensions des surfaces à préparer et à recouvrir de mastic, peut comporter une ou plusieurs torches à plasma froid et le cas échéant une ou plusieurs buses pour déposer du mastic. Lorsque l'effecteur comporte plusieurs torches à plasma froid ou plusieurs buses, les moyens de contrôle et de commande 20 gère l'activation de tout ou partie des torches et des buses suivant la largeur des surfaces à traiter qui n'est pas nécessairement constante sur une pièce ou entre différentes pièces pouvant être préparées sur le même dispositif 100.

Considérant à nouveau le dispositif 100 dans son ensemble, ledit dispositif comporte également au moins un robot d'épinglage 50.

Un robot d'épinglage 50 est représenté sur les figures 3 et 4.

Le robot d'épinglage n'est pas utilisé pour la préparation des pièces devant être pré-assemblées et est mis en oeuvre pour les besoins du pré-assemblage lorsqu'une seconde pièce 91 est positionnée sur la première pièce 90.

Les déplacements et opérations réalisés par le robot d'épinglage 50 sont contrôlés, comme pour le robot de préparation 10, par des moyens de contrôle et de commande qui sont couplés aux moyens de contrôle et de commande 20 du robot de préparation. Dans le dispositif 100 un robot d'épinglage 50 est esclave d'un robot de préparation 10.

Le robot d'épinglage 50 comporte un effecteur 52 adapté à la pose de fixations provisoires.

Dans le dispositif 100, le robot d'épinglage 50 est situé sur une face arrière de la première pièce 90, maintenue par le bâti 80, opposée à une face avant soumise à une préparation de surface au moyen du robot de préparation 10 et sur laquelle face avant doivent être fixées les secondes pièces 91 pour le pré-assemblage à réaliser.

Le robot d'épinglage 50 est par exemple, mais non nécessairement, un robot similaire au robot de préparation 10 comportant un bras articulé 51 avec les degrés de liberté souhaités pour la pose des fixations provisoires et le cas échéant mobile par exemple sur des rails.

Dans le contexte d'un atelier de pré-assemblage devant pré-assembler des ensembles de pièces pour former des structures assemblées différentes, les robots de préparation et d'épinglage disposent avantageusement de la capacité de changer d'effecteurs en fonction des pièces à préparer et à pré-assembler.

Par exemple différents effecteurs sont agencés dans un magasin d'effecteurs dans lequel un robot, commandé par le centre de commande et de contrôle va sélectionner et monter sur le bras dudit robot un effecteur adapté pour une opération devant être réalisée.

L'agencement du dispositif, et de ses variantes possibles, sera mieux compris à la description de la mise en oeuvre du procédé de pré-assemblage et de l'étape de préparation des pièces en vue de leur assemblage avec interposition de mastic.

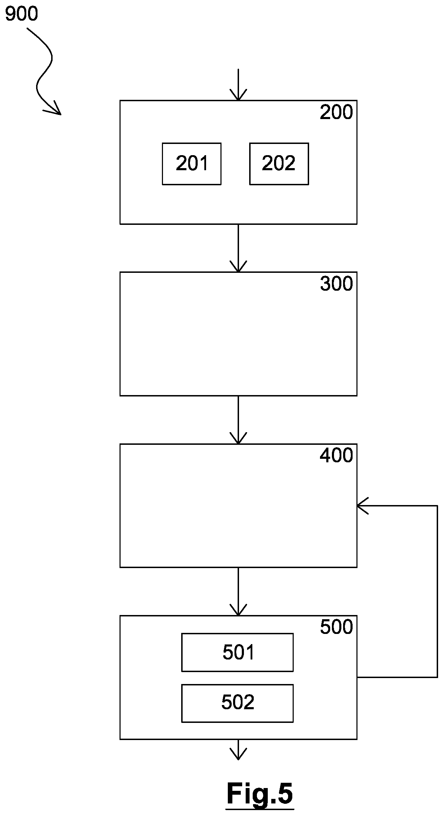

Pour réaliser le pré-assemblage d'une première pièce 90 avec au moins une seconde pièce 91, avec interposition d'un mastic sur les parties en contact des dites première et seconde pièces, il est mis en oeuvre un procédé 900 suivant la figure 5 comportant les étapes suivantes.

Dans une première étape 200 du procédé les première 90 et secondes 91 pièces sont placées 201 maintenues par des bâtis 80, 81 en vue d'une préparation de surfaces des dites première et secondes pièces devant se trouver en contact entre elles avec l'interposition du mastic et des données sont introduites 202, par exemple au moyen d'un fichier numérique de pilotage du robot de préparation 10, dans les moyens de contrôle et de commande 20 pour définir la position des surfaces devant être préparées et recouvertes de mastic.

Dans une seconde étape 300, les surfaces de la première pièce 90 et de la ou des secondes pièces 91 devant se trouver en contact étant identifiées, lesdites surfaces sont soumises à au moins un jet d'un plasma froid produit par une torche à plasma froid 13 déplacée par le robot de préparation 10.

Des paramètres du jet de plasma froid, tels que débit, vitesse du jet, température, et le temps d'exposition des surfaces à décaper au jet déterminés en particulier en fonction du matériau de la pièce et des résultats de préparation de surface voulus, par exemple vérifiés par essais, sont également introduits lors de l'étape 202 dans les moyens de contrôle et de commande 20 pour être appliqués par le robot de préparation en fonction de l'emplacement préparé.

Le plasma froid permet sans dégrader le matériau de la pièce de nettoyer la surface traitée par une destruction des poussières, des graisses et des composés organiques polluant la surface de la pièce.

En outre la neutralité électrique du plasma froid ne charge pas électriquement la surface traitée qui de ce fait n'a pas de tendance à attirer de manière électrostatique de nouvelles poussières avant la dépose du mastic.

Le plasma froid modifie également la structure physique de la surface en particulier en créant un état de surface dont la rugosité est favorable à l'accrochage des mastics.

Au cours de cette seconde étape 300, le jet de plasma froid est déplacé suivant une trajectoire programmée pour décaper les surfaces devant être recouvertes de mastic.

Il doit être remarqué ici que dans de nombreux domaines de l'assemblage de pièces de structures, les surfaces mises en contact sont le plus souvent de largeur petite par rapport à leur longueur.

Dans ces cas, avantageusement le jet de plasma sera agencé pour correspondre en dimensions à la largeur des surfaces à décaper, le cas échéant en combinant plusieurs torches à plasma froid, et le jet sera déplacé en suivant la longueur des dites surfaces à décaper.

Dans une troisième étape 400 un cordon de mastic frais est déposé sur des surfaces décapées par le jet de plasma.

Le dépôt 400 de mastic frais n'est cependant réalisé que lorsque la température de la surface sur la laquelle est déposé le mastic, température qui s'est élevée lors de l'étape 300 de préparation de surface par le plasma froid, est abaissée en dessous d'une valeur admise pour éviter une polymérisation prématurée du mastic, par exemple en dessous d'une température de 30°C.

Cette condition de température peut être vérifiée par une mesure au moyen d'un capteur de température avec ou sans contact.

Elle peut également être établie, après calibration, par un temps de relaxation après le passage de la torche à plasma froid, temps de relaxation qui peut être une fonction de la température ambiante dans l'atelier où est réalisé le pré-assemblage.

Le cas échéant le refroidissement est accéléré après le passage de la torche à placement par soufflage d'un gaz froid, par exemple de l'air ou de l'azote.

Par cordon de mastic frais, il faut comprendre qu'un mastic frais, c'est-à-dire de mastic dont la polymérisation n'a pas encore affectée sensiblement la viscosité souhaitée pour sa mise en oeuvre, est déposé de manière sensiblement continue avec un volume par unité de longueur voulu sur les surfaces décapées.

Les caractéristiques du cordon de mastic frais résultent de la forme d'une filière de la buse utilisée pour déposer le mastic frais, du débit de mastic délivré par ladite buse et d'une vitesse de déplacement de la buse.

Il convient de noter que le mastic frais n'est pas nécessairement déposé sur les surfaces des deux pièces devant être assemblée mais, de préférence, n'est déposé que sur l'une des deux pièces, la quantité de mastic frais étant ajustée suivant le cas.

Dans une quatrième étape 500, lorsque toutes les surfaces en contact de la première pièce 90 et d'au moins une seconde pièce 91 ont été préparées, et un cordon de mastic frais déposé sur au moins une des pièces, les deux pièces 90, 91 sont pré-assemblées, dans une période de temps pendant laquelle le mastic peut encore être travaillé, dans la position relative qu'elles doivent avoir dans l'assemblage à réaliser.

Pour cette étape de pré-assemblage, le robot de préparation 10 saisi une seconde pièce 91, dans l'exemple illustré un cadre de hublot, et vient positionner 501 la pièce saisie sur la première pièce 90, dans l'exemple illustré le panneau de fuselage, maintenue fixe.

Ensuite le robot d'épinglage 50, opérant par une face opposée de la première pièce 90, maintenue fixe, et agissant de manière coordonnée avec le robot de préparation 10 portant la seconde pièce 91 saisie, place 502 des fixations provisoires qui maintiennent les surfaces en contact serrées.

Dans cette configuration le robot d'assemblage 10 est maître et le robot d'épinglage 50 est esclave.

Lors de ce positionnement de la pièce saisie et du serrage réalisé par les fixations provisoires, le cordon de mastic est écrasé pour former un film de mastic, relativement mince, sur les surfaces mises en contact dans l'assemblage.

Dans une étape ultérieure, le cas échéant lorsque le mastic aura atteint une polymérisation souhaitée, de manière connue les fixations provisoires seront retirées et des fixations définitives seront mises en place pour réaliser l'assemblage.

Dans mode opératoire préféré, il est procédé lors de l'étape 300 à la préparation de surface par le robot de préparation 10 de toutes les surfaces devant être préparées pour la première pièce 90 et pour une pluralité de secondes pièces 91 en attente de pré-assemblage sur le dispositif 100.

Puis pour chaque seconde pièce de ladite pluralité, le mastic est déposé suivant le mode opératoire de l'étape 400 et la seconde pièce considérée est positionnée, étape 501, sur la première pièce maintenue fixe pour la pose des moyens de fixation provisoire, étape 502.

Les étapes 400 et 500 sont alors reprises autant que nécessaire pour chacune des secondes pièces préparées lors de l'étape 300 de préparation de surface.

Ainsi le mastic une fois déposé n'est exposé à une pollution éventuelle et ne polymérise qu'un temps minimum avant le positionnement et la pose des fixations provisoires.

La rapidité de l'exécution du pré-assemblage permet également de mettre en oeuvre des mastics avec une polymérisation plus rapide et permet de diminuer les cycles d'assemblage incorporant une pose des fixations définitives.

Le procédé suivant l'invention, et le dispositif particulièrement adapté au procédé, permettent de réaliser le pré-assemblage d'éléments de structure avec de nombreux avantages. Notamment le procédé :
- permet de maîtriser la quantité de mastic déposée avec une parfaite reproductibilité des résultats d'où une consommation réduite de mastic, les excès de matière fréquents dans les procédés manuels étant évités ;
- évite la production de poussières des méthodes de décapage mécanique des solutions antérieures et donc la pollution de l'atelier et des surfaces sur lesquelles le mastic doit adhérer ; - évite l'usage de solvants et de consommables tels que les lingettes et les gants ;
- en réalisant les tâches pouvant conduire à des positions et attitudes inconfortables, limite les risques de troubles musculo-squelettiques des opérateurs travaillant à l'assemblage des pièces.

Enfin, en particulier en réalisant la préparation de surface suivi rapidement du dépôt du mastic, le procédé permet de réaliser les opérations de pré-assemblage avec un temps réduit par rapport aux solutions connues.

## Revendications

1. Procédé de pré-assemblage d'une première pièce (90) avec au moins une seconde pièce (91) et avec interposition d'un mastic dans lequel des surfaces de première et secondes pièces devant être mises en contact sont soumises à une opération de préparation de surface suivi d'un dépôt d'un mastic polymérisable frais sur la surface préparée d'au moins une des première ou secondes pièces et dans lequel les dites première pièce et au moins une seconde pièce sont pré-assemblées par des fixations provisoires, **caractérisé en ce qu'**il comporte les étapes de :
- préparation des surfaces, devant être mises en contact, de la première pièce (90) et de l'au moins une seconde pièce (91) par la projection sur les surfaces à préparer d'un jet de plasma froid généré par au moins une torche à plasma froid (13) portée par un effecteur (12) d'au moins un robot de préparation (10), puis ;
- refroidissement desdites surfaces devant être mises en contact à une température inférieure à une température admise pour le dépôt de mastic frais, puis ;
- dépôt d'un cordon de mastic frais, au moyen du robot de préparation (10), sur les surfaces devant être mise en contact de la première pièce (90) et / ou de l'au moins une seconde pièce (91), puis ;
- positionnement par le robot de préparation (10) de ladite au moins une seconde pièce (91) sur la première pièce (90), puis ;
- pose de fixations provisoires et serrage de ladite au moins une seconde pièce avec la première pièce par un robot d'épinglage (50), lorsque le mastic est encore frais.

2. Procédé suivant la revendication 1 dans lequel le cordon de mastic frais est déposé au moyen d'une buse d'une unité de production (40) de mastic, par déplacement de ladite buse portée par l'effecteur (12) du robot de préparation (10) sur des surfaces préalablement préparées des première pièce (90) et au moins une seconde pièce (91) les dites première et secondes pièces étant maintenues individuellement fixes sur des bâtis (80, 81).

3. Procédé suivant la revendication 1 dans lequel le robot de préparation (10) déplace une pièce, maintenue par des moyens de préhension (14) de l'effecteur (12) dudit robot de préparation, pour déposer un cordon de mastic frais délivré par une buse d'une unité de production (40) de mastic frais sur des surfaces préalablement préparées.

4. Procédé suivant la revendication 2 ou la revendication 3 comportant une étape préalable de chargement, dans un système de contrôle et de commande (20) d'au moins un robot de préparation (10), de données caractérisant les surfaces des pièces (90, 91) devant être préparées et des surfaces sur lesquelles doit être déposé du mastic et caractérisant une trajectoire en position et en orientation de la ou des torches à plasma froid (13) et de la ou des buses (14) par rapport aux pièces (90, 91).

5. Procédé suivant l'une des revendications précédentes dans lequel une pluralité de secondes pièces (91) sont assemblées à la première pièce (90) et dans lequel :
- l'étape de préparation de surface est réalisée pour la pluralité de secondes pièces (91) et pour la pièce (90) à laquelle ladite pluralité de pièces doit être assemblée, puis ;
- pour chacune des secondes pièces (91) de la pluralité de secondes pièces sont réalisées successivement les étapes a) de dépôt d'un cordon de mastic frais, b) de positionnement par le robot de préparation (10) de la seconde pièce considérée devant être assemblée sur la première pièce (90) et c) de pose de fixations provisoires et de serrage de la seconde pièce considérée avec ladite première pièce par un robot d'épinglage (50), les étapes a), b) et c) étant effectuées sur une seconde pièce considérée avant d'être effectuées sur une autre pièce de la pluralité de secondes pièces.

6. Dispositif (100) de pré-assemblage de pièces (90, 91) de structure à assembler avec interposition de mastic comportant :
- au moins un robot de préparation (10) dont un effecteur (12) comporte au moins un préhenseur adapté à la saisie de pièces à assembler ;
- des moyens de commande et de contrôle (20) du robot de préparation (10) ;
- un premier bâti (80) agencé pour maintenir fixe une première pièce (90) dans le dispositif (100) ;
- un second bâti (81) agencé pour maintenir au moins une seconde pièce (91) devant être déplacée dans le dispositif (100) par un robot de préparation ;
- au moins une unité de production (40) de mastic frais et de distribution de mastic frais par au moins une buse de ladite unité de production pour déposer un cordon de mastic sur la première pièce et / ou la ou les secondes pièces, **caractérisé en ce que** au moins un effecteur (12) du robot de préparation (10) comporte au moins une torche à plasma froid (13)

7. Dispositif suivant la revendication 6 comportant en outre au moins un robot d'épinglage (50) fonctionnant en esclave du robot de préparation (10) lors de la pose de fixations provisoires destinées à fixer l'au moins une seconde pièce (91) à la première pièce (90).

8. Dispositif suivant la revendication 6 ou la revendication 7 dans lequel la ou les torches à plasma froid (13) sont agencées pour produire en fonctionnement un jet de plasma froid d'une largeur efficace sensiblement égale à une largeur d'une surface à préparer.

9. Dispositif suivant la revendication 6 ou la revendication 8 dans lequel la ou les buses (14) sont agencées pour déposer un cordon (91) de mastic frais d'un diamètre moyen correspondant à un volume linéique résultant d'une largeur d'une surface devant être recouverte de mastic dans l'assemblage à réaliser et d'une épaisseur voulue, sensiblement constante.

10. Dispositif suivant l'une des revendications 6 à 9 dans lequel une unité de production (40) de mastic frais est solidaire d'un robot de préparation (10) et dans lequel l'au moins une buse est portée par l'effecteur (12) dudit robot de préparation.

11. Dispositif suivant l'une des revendications 6 à 9 dans lequel l'au moins une unité de production (40) de mastic frais est agencée dans le dispositif (100) de sorte que la ou les buses de ladite unité de production, délivrant du mastic frais, sont séparées du ou des robots de préparation (10) et situées dans un rayon d'action de l'effecteur (12) d'un robot de préparation (10).

12. Dispositif suivant l'une des revendications 6 à 11 dans lequel un capot (15) solidaire de l'effecteur (12) protège un volume affecté par le jet de plasma froid, compris entre une sortie de la ou des torches à plasma froid (13) et une surface d'une pièce (90, 91) en cours de préparation de surface.

13. Dispositif suivant l'une des revendications 6 à 12 dans lequel le mastic frais alimentant une ou des buses (14) est obtenu par un mélange en continu de deux composants du mastic stockés dans des contenants (41, 42) distincts.

14. Dispositif suivant l'une des revendications 6 à 13 dans lequel le second bâti (81) est configuré pour maintenir une pluralité de secondes pièces (91) devant être pré-assemblées avec la première pièce (90).

## Patentansprüche

1. Verfahren zum Vormontieren eines ersten Bauteils (90) mit mindestens einem zweiten Bauteil (91) und unter Einfügung eines Dichtstoffs, wobei die Oberflächen von ersten und zweiten Bauteilen, die in Kontakt gebracht werden sollen, einem Vorgang zur Vorbereitung der Oberfläche unterzogen werden, gefolgt von einem Auftrag eines frischen polymerisierbaren Dichtstoffs auf der vorbereiteten Oberfläche von mindestens einem der ersten oder zweiten Bauteile, und wobei das erste Bauteil und das mindestens eine zweite Bauteil durch provisorische Befestigungsvorrichtungen vormontiert werden, **dadurch gekennzeichnet, dass** es die folgenden Schritte umfasst:
- Vorbereiten der Oberflächen, die in Kontakt gebracht werden sollen, des ersten Bauteils (90) und des mindestens einen zweiten Bauteils (91) durch das Aufsprühen auf die vorzubereitenden Oberflächen eines Kaltplasmastrahls, der von mindestens einem Kaltplasmabrenner (13) erzeugt wird, der von einem End-of-arm-Werkzeug (12) mindestens eines Vorbereitungsroboters (10) getragen wird, dann;
- Abkühlen der Oberflächen, die in Kontakt gebracht werden sollen, auf eine Temperatur unterhalb einer Temperatur, die für den Auftrag von frischem Dichtstoff zulässig ist, dann;
- Auftragen eines Streifens aus frischem Dichtstoff mithilfe des Vorbereitungsroboters (10) auf die Oberflächen, die mit dem ersten Bauteil (90) und/oder dem mindestens einen zweiten Bauteil (91) in Kontakt gebracht werden sollen, dann;
- Positionieren durch den Vorbereitungsroboter (10) des mindestens einen zweiten Bauteils (91) auf dem ersten Bauteil (90), dann;
- Anbringen von provisorischen Befestigungsvorrichtungen und Festklemmen des mindestens einen zweiten Bauteils mit dem ersten Bauteil durch einen Anheft-Roboter (50), wenn der Dichtstoff noch frisch ist.

2. Verfahren nach Anspruch 1, wobei der Streifen aus frischem Dichtstoff mithilfe einer Düse einer Dichtstoff-Produktionseinheit (40) aufgetragen wird, indem die Düse, die von dem End-of-arm-Werkzeug (12) des Vorbereitungsroboters (10) getragen wird, auf zuvor vorbereitete Oberflächen des ersten Bauteils (90) und des mindestens einen zweiten Bauteils (91) verschoben wird, wobei das erste und das zweite Bauteil jeweils auf Gestellen (80, 81) befestigt gehalten werden.

3. Verfahren nach Anspruch 1, wobei der Vorbereitungsroboter (10) ein Bauteil verschiebt, das von Greifeinrichtungen (14) des End-of-arm-Werkzeugs (12) des Vorbereitungsroboters gehalten wird, um einen Streifen aus frischem Dichtstoff, der von einer Düse einer Produktionseinheit (40) für frischen Dichtstoff geliefert wird, auf zuvor vorbereitete Oberflächen aufzutragen.

4. Verfahren nach Anspruch 2 oder Anspruch 3, umfassend einen vorausgehenden Schritt zum Laden, in ein Kontroll- und Steuerungssystem (20) mindestens eines Vorbereitungsroboters (10), von Daten, die die Oberflächen der Bauteile (90, 91), die vorbereitet werden sollen, und die Oberflächen, auf die der Dichtstoff aufgetragen werden soll, charakterisieren und die eine Bahn in Bezug auf die Position und die Ausrichtung des oder der Kaltplasmabrenner(s) (13) und der Düse(n) (14) in Bezug auf die Bauteile (90, 91) charakterisieren.

5. Verfahren nach einem der vorhergehenden Ansprüche, wobei mehrere zweite Bauteile (91) an das erste Bauteil (90) anmontiert werden, und wobei:
- der Schritt zur Vorbereitung der Oberfläche für mehrere zweite Bauteile (91) und für das Bauteil (90), an das die mehreren Bauteile anmontiert werden sollen, ausgeführt wird, dann;
- für jedes der zweiten Bauteile (91) der mehreren zweiten Bauteile nacheinander die Schritte a) zum Auftragen eines Streifens aus frischem Dichtstoff, b) zum Positionieren durch den Vorbereitungsroboter (10) des betrachteten zweiten Bauteils, das an das erste Bauteil (90) anmontiert werden soll, und c) zum Anbringen von provisorischen Befestigungsvorrichtungen und zum Festklemmen des zweiten betreffenden Bauteils mit dem ersten Bauteil durch einen Anheft-Roboter (50) ausgeführt werden, wobei die Schritte a), b) und c) an einem betrachteten zweiten Bauteil durchgeführt werden, bevor sie an einem anderen Bauteil der mehreren der zweiten Bauteile durchgeführt werden.

6. Vorrichtung (100) zum Vormontieren von Strukturbauteilen (90, 91), die unter Einfügung von Dichtstoff montiert werden sollen, umfassend:
- mindestens einen Vorbereitungsroboter (10), dessen einer End-of-arm-Werkzeug (12) mindestens einen Greifer umfasst, der zum Ergreifen von Bauteilen geeignet ist, die montiert werden sollen;
- Einrichtungen zum Steuern und Kontrollieren (20) des Vorbereitungsroboters (10);
- ein erstes Gestell (80), das angeordnet ist, um ein erstes Bauteil (90) fest in der Vorrichtung (100) zu halten;
- ein zweites Gestell (81), das angeordnet ist, um mindestens ein zweites Bauteil (91) zu halten, das von einem Vorbereitungsroboter in die Vorrichtung (100) verschoben werden soll;
- mindestens eine Einheit zur Produktion (40) von frischem Dichtstoff und zur Verteilung von frischem Dichtstoff durch mindestens eine Düse der Einheit zur Produktion, um einen Dichtstoffstreifen auf dem ersten Bauteil und/oder dem oder den zweiten Bauteilen aufzutragen, **dadurch gekennzeichnet, dass** mindestens ein End-of-arm-Werkzeug (12) des Vorbereitungsroboters (10) mindestens einen Kaltplasmabrenner (13) umfasst.

7. Vorrichtung nach Anspruch 6, umfassend ferner mindestens einen Anheft-Roboter (50), der während der Anbringung von provisorischen Befestigungsvorrichtungen, die dazu bestimmt sind, das mindestens eine zweite Bauteil (91) an dem ersten Bauteil (90) zu befestigen, als Nebenroboter (Slave) des Vorbereitungsroboters (10) arbeitet.

8. Vorrichtung nach Anspruch 6 oder Anspruch 7, wobei der oder die Kaltplasmabrenner (13) angeordnet sind, um im Betrieb einen Kaltplasmastrahl mit einer Behandlungsbreite zu produzieren, die im Wesentlichen gleich einer Breite einer vorzubereitenden Oberfläche ist.

9. Vorrichtung nach Anspruch 6 oder Anspruch 8, wobei die Düse(n) (14) angeordnet sind, um einen Streifen (91) aus frischem Dichtstoff mit einem mittleren Durchmesser aufzutragen, der einem Volumen pro Längeneinheit entspricht, das aus einer Breite einer Oberfläche, die bei der durchzuführenden Montage mit Dichtstoff bedeckt werden soll, und einer im Wesentlichen konstanten gewünschten Dicke resultiert.

10. Vorrichtung nach einem der Ansprüche 6 bis 9, wobei eine Einheit zur Produktion (40) von frischem Dichtstoff mit einem Vorbereitungsroboter (10) kombiniert ist, und wobei die mindestens eine Düse von dem End-of-arm-Werkzeug (12) des Vorbereitungsroboters getragen wird.

11. Vorrichtung nach einem der Ansprüche 6 bis 9, wobei die mindestens eine Einheit zur Produktion (40) von frischem Dichtstoff derart in der Vorrichtung (100) angeordnet ist, dass die Düse(n) der frischen Dichtstoff liefernden Produktionseinheit von dem oder den Vorbereitungsrobotern (10) getrennt sind, und sich in einem Aktionsradius des End-of-arm-Werkzeugs (12) eines Vorbereitungsroboters (10) befinden.

12. Vorrichtung nach einem der Ansprüche 6 bis 11, wobei eine Abdeckung (15) die mit dem End-of-arm-Werkzeug (12) fest verbunden ist, ein Volumen schützt, das von dem Kaltplasmastrahl beeinträchtigt wird, das im Bereich zwischen einem Ausgang des oder der Kaltplasmabrenner(s) (13) und einer Oberfläche eines Bauteils (90, 91), die gerade einer Oberflächevorbehandlung unterzogen wird, liegt.

13. Vorrichtung nach einem der Ansprüche 6 bis 12, wobei der frische Dichtstoff, mit dem eine oder mehrere Düse(n) (14) versorgt werden, durch kontinuierliches Mischen von zwei Komponenten des Dichtstoffs, die in verschiedenen Behältern (41, 42) gelagert sind, erhalten wird.

14. Vorrichtung nach einem der Ansprüche 6 bis 13, wobei das zweite Gestell (81) konfiguriert ist, um mehrere der zweiten Bauteile (91) zu halten, die mit dem ersten Bauteil (90) vormontiert werden sollen.

## Claims

1. Method for pre-assembling a first part (90) with at least one second part (91) and with interposition of a sealant, wherein surfaces of the first and second parts having to be placed in contact are subjected to a surface preparation operation followed by a deposition of a fresh polymerizable sealant on the prepared surface of at least one of the first or second parts and in which said first part and at least one second part are pre-assembled by temporary fixings, **characterized in that** it comprises the steps of:
- preparation of the surfaces, having to be placed in contact, of the first part (90) and of the at least one second part (91) by the spraying, onto the surfaces to be prepared, of a cold plasma jet generated by at least one cold plasma torch (13) borne by an effector (12) of at least one preparation robot (10), then;
- cooling of said surfaces having to be placed in contact to a temperature below a temperature allowed for the deposition of fresh sealant, then;
- deposition of a rope of fresh sealant, by means of the preparation robot (10), on the surfaces having to be placed in contact of the first part (90) and/or of the at least one second part (91), then;
- positioning, by the preparation robot (10), of said at least one second part (91) on the first part (90), then;
- fitting of temporary fixings and clamping of said at least one second part with the first part by a pinning robot (50), when the sealant is still fresh.

2. Method according to Claim 1, wherein the rope of fresh sealant is deposited by means of a nozzle of a sealant production unit (40), by displacement of said nozzle borne by the effector (12) of the preparation robot (10) over previously prepared surfaces of the first part (90) and at least one second part (91), said first and second parts being kept individually fixed on frames (80, 81).

3. Method according to Claim 1, wherein the preparation robot (10) displaces a part, held by gripping means (14) of the effector (12) of said preparation robot, to deposit a rope of fresh sealant delivered by a nozzle of a fresh sealant production unit (40) on previously prepared surfaces.

4. Method according to Claim 2 or Claim 3 comprising a preliminary step of loading, in a monitoring and control system (20) of at least one preparation robot (10), of data characterizing the surfaces of the parts (90, 91) having to be prepared and surfaces on which sealant has to be deposited and characterizing a trajectory in position and in orientation of the cold plasma torch or torches (13) and of the nozzle or nozzles (14) relative to the parts (90, 91).

5. Method according to one of the preceding claims, in which a plurality of second parts (91) are assembled with the first part (90) and wherein:
- the surface preparation step is performed for the plurality of second parts (91) and for the part (90) with which said plurality of parts has to be assembled, then;
- for each of the second parts (91) of the plurality of second parts the steps a) of deposition of a rope of fresh sealant, b) of positioning, by the preparation robot (10), of the second part which is determined having to be assembled on the first part (90) and c) of fitting of temporary fixings and of clamping of said determined second part with said first part by a pinning robot (50) are performed in succession, the steps a), b) and c) being performed on a determined second part before being performed on another part of the plurality of second parts.

6. Device (100) for pre-assembling structural parts (90, 91) to be assembled with the interposition of sealant comprising:
- at least one preparation robot (10) of which an effector (12) comprises at least one gripper suitable for grasping parts to be assembled;
- control and monitoring means (20) for the preparation robot (10);
- a first frame (80) arranged to keep a first part (90) fixed in the device (100);
- a second frame (81) arranged to hold at least one second part (91) having to be displaced in the device (100) by a preparation robot;
- at least one unit (40) for producing fresh sealant and dispensing fresh sealant through at least one nozzle of said production unit to deposit a rope of sealant on the first part and/or the second part or parts,
**characterized in that** at least one effector (12) of the preparation robot (10) comprises at least one cold plasma torch (13).

7. Device according to Claim 6, further comprising at least one pinning robot (50) operating as slave to the preparation robot (10) in the fitting of temporary fixings intended to fix the at least one second part (91) to the first part (90).

8. Device according to Claim 6 or Claim 7, wherein the cold plasma torch or torches (13) are arranged to produce, in operation, a cold plasma jet with an effective width substantially equal to a width of a surface to be prepared.

9. Device according to Claim 6 or Claim 8, whrein the nozzle or nozzles (14) are arranged to deposit a rope (91) of fresh sealant of an average diameter corresponding to a volume per unit of length resulting from a width of a surface having to be covered with sealant in the assembly to be produced and of a substantially constant desired thickness.

10. Device according to one of Claims 6 to 9, wherein a fresh sealant production unit (40) is consolidated to a preparation robot (10) and in which the at least one nozzle is borne by the effector (12) of said preparation robot.

11. Device according to one of Claims 6 to 9, wherein the at least one fresh sealant production unit (40) is arranged in the device (100) such that the nozzle or nozzles of said production unit, delivering fresh sealant, are separate from the preparation robot or robots (10) and situated within an action radius of the effector (12) of a preparation robot (10).

12. Device according to one of Claims 6 to 11, wherein a cap (15) consolidated to the effector (12) protects a volume affected by the cold plasma jet, contained between an output of the cold plasma torch or torches (13) and a surface of a part (90, 91) currently undergoing surface preparation.

13. Device according to one of Claims 6 to 12, wherein the fresh sealant feeding one or more nozzles (14) is obtained by a continuous mixing of two sealent components stored in distinct containers (41, 42).

14. Device according to one of Claims 6 to 13, wherein the second frame (81) is configured to hold a plurality of second parts (91) having to be pre-assembled with the first part (90).
